# Europäisches Patentamt
# European Patent Office
# Office européen des brevets

(19)

(11) Veröffentlichungsnummer: **0 200 974**
**B1**

(12) # EUROPÄISCHE PATENTSCHRIFT

(45) Veröffentlichungstag der Patentschrift:
**27.12.89**

(51) Int. Cl.⁴: **G 05 B 19/04**

(21) Anmeldenummer: **86105434.4**

(22) Anmeldetag: **19.04.86**

(54) Programmiergerät für eine speicherprogrammierbare Steuerung.

(30) Priorität: **25.04.85 CH 1763/85**

(43) Veröffentlichungstag der Anmeldung:
**12.11.86 Patentblatt 86/46**

(45) Bekanntmachung des Hinweises auf die Patenterteilung:
**27.12.89 Patentblatt 89/52**

(84) Benannte Vertragsstaaten:
**AT CH DE FR GB LI NL SE**

(56) Entgegenhaltungen:
**DE-A-3 222 305**
**US-A-4 445 169**

(73) Patentinhaber: **BBC Brown Boveri AG,
Haselstrasse, CH- 5401 Baden (CH)**

(72) Erfinder: **Kaufmann, Felix, Kindergartenweg 185,
CH- 5243 Mülligen (CH)**
Erfinder: **Schillinger, Daniel, Hagenbüchlerstrasse
23, CH- 5442 Fislisbach (CH)**

LIBER, STOCKHOLM 1989

EP 0 200 974 B1

**Beschreibung**

Die Erfindung betrifft ein Programmiergerät für eine speicherprogrammierbare Steuerung gemäss dem Oberbegriff des Anspruchs 1.

Unter einem Programmiergerät für eine speicherprogrammierbare Steuerung versteht man in der modernen Steuerund Regeltechnik eine kleine, kompakt aufgebaute und daher leicht transportable Datenverarbeitungsanlage, welche über eine genormte Schnittstelle an eine Vielzahl von verschiedenen Steuerungen anschliessbar ist. Im Programmiergerät sind alle Funktionen zusammengefasst, die erforderlich sind, um die Steuerprogramme für die speicherprogrammierbaren Steuerungen zu erstellen und zu warten. Die entsprechenden Funktionen brauchen deshalb bei den Steuerungen selbst nicht vorgesehen zu werden. Um dem Steuerund Regeltechniker die Programmierarbeit zu erleichtern, erlauben komfortable Programmiergeräte eine Programmierung direkt auf Funktionsplanebene, d.h. in einer dem Steuer- und Regeltechniker besonders vertrauten Darstellung. Der Funktionsplan der jeweiligen Steuerung wird dazu auf einer graphischen Anzeigevorrichtung des Programmiergeräts dargestellt und der Anwender kann mittels einfacher Kommandos Änderungen oder Ergänzungen im Funktionsplan vornehmen. Das zum Funktionsplan zugehörige Steuerprogramm wird vom Programmiergerät ohne Zutun des Anwenders selbsttätig erzeugt. Umgekehrt erzeugt das Programmiergerät aus einem bereits vorhandenen maschinenlesbar abgespeicherten Steuerprogramm automatisch den zugehörigen Funktionsplan auf der Anzeigevorrichtung.

Ein Programmiergerät der beschriebenen Art ist beispielsweise bekannt aus US-A-4 445 169, DE-A-3 222 305 und einem von der Siemens Aktiengesellschaft Berlin und München, herausgegebenen Buch von Hans Berger mit dem Titel "Steuerungen programmieren mit STEP 5", Band 1, 4. Aufl., 1984. Auch bei dem bekannten Programmiergerät kann der Anwender das Steuerprogramm für die speicherprogrammierbare Steuerung direkt im Funktionsplan erstellen. Das bekannte Programmiergerät arbeitet jedoch mit einer Funktionsdarstellung von stark eingeschränkter Allgemeinheit, in der die einzelnen Funktionsblöcke ausschliesslich hierarchisch miteinander verknüpft sind und in der deshalb keine Signalverzweigungen und Signalverkreuzungen auftreten können. Wird beispielsweise, was häufig der Fall ist, ein und dasselbe Signal von zwei Funktionsblöcken als Eingangssignal benötigt, so werden von dem bekannten Programmiergerät zur Vermeidung von Signalverzweigungen im Funktionsplan zwei separate Teilfunktionspläne auf der Anzeigevorrichtung erzeugt. Dies geht zu Lasten der Uebersichtlichkeit und der Informationsdichte des dargestellten Bildes. Uebersichtlichkeit und Informationsdichte des dargestellten Bildes sind aber entscheidende Faktoren für die Handhabung und den Bedienungskomfort des Programmiergeräts. Da von einer einfachen Handhabung und einem hohen Bedienungskomfort in zunehmendem Masse die Wirtschaftlichkeit der Programmherstellung und Programmwartung und damit überhaupt das rationelle Abwickeln der Automatisierungsaufgaben abhängt, ist die Erzeugung von Funktionsplandarstellungen mit höherer Informationsdichte dringend erwünscht.

Während es in zunehmendem Masse üblich ist, den Funktionsplan zur eigentlichen Programmiersprache zu machen, diente der Funktionsplan bisher häufig als Verdrahtungsschema, bei dem - wie etwa in der DE-A-3 222 305 beschrieben - die auszuführenden Funktionen durch Relais mit geöffneten und/oder geschlossenen Kontakten dargestellt wurden. Bei diesem Programmiergerät sind die durch Relais nachgebildeten Funktionen hierarchisch miteinander verknüpft. Bei einem in Fig. 3 der DE-A-3 222 305 dargestellten Verdrahtungsschema werden zwar zwei Eingangsanschlüsse jeweils gemeinsam an ein geöffnetes und ein geschlossenes Relais geführt, jedoch wird hierdurch keine Signalverzweigung erreicht, da beide Relais auf ihrer Ausgangsseite miteinander verbunden sind und somit lediglich eine durch ihre Parallelschaltung bedingte gemeinsame Funktion erzeugen.

Die Erzeugung von komplizierter aufgebauten Funktionsplandarstellungen ist im allgemeinen jedoch mit einem höheren Rechenaufwand für den Digitalrechner verbunden. Dessen Rechenleistung und Speicherkapazität kann aber ohne Zugeständnisse an Grösse, Gewicht und Preis nicht ohne weiteres erhöht werden.

Die Erfindung, wie sie in den Ansprüchen gekennzeichnet ist, löst die Aufgabe, bei einem Programmiergerät der eingangs genannten Art Operationen im Betriebssystem des Digitalrechners vorzusehen, mit denen die Funktionsblöcke in den Funktionsplandarstellungen in rationeller Weise automatisch so angeordnet werden, dass zwischen ihnen auch Signalverzweigungen und Signalkreuzungen dargestellt werden können.

Die durch die Erfindung erreichten Vorteile sind im wesentlichen darin zu sehen, dass der angestrebte Erfolg, d.h. die automatische Erzeugung von Funktionsplandarstellungen mit Signalverzweigungen und Signalkreuzungen und deshalb hoher Informationsdichte in besonders rationeller Weise erreicht wird. Eine Erhöhung der Rechenleistung und der Speicherkapazität des Digitalrechners ist nicht erforderlich.

Im folgenden wird ein Ausführungsbeispiel der Erfindung anhand der Zeichnung erläutert.

Es zeigt:

Fig. 1 in schematischer Darstellung eine mit einem technischen Prozess gekoppelte speicherprogrammierbare Steuerung, an die ein Programmiergerät angeschlossen ist,

Fig. 2 ein Beispiel eines Funktionsplans eines Steuerprogramms einer speicherprogrammierbaren Steuerung,

Fig. 3 ein erstes Flussdiagramm zur Erläuterung der erfindungsgemäss vorgesehe-

nen Zerlegung der Datei mit den Funktionsaufrufen in Teilsequenzen von Funktionsaufrufen,

Fig. 4 den Funktionsplan nach Fig. 2, jedoch mit besonderer Hervorhebung der die Teilsequenzen darstellenden Teilfunktionspläne,

Fig. 5 ein Ausschnitt aus dem Funktionsplan nach Fig. 2,

Fig. 6 ein zweites Flussdiagramm zur Erläuterung der erfindungsgemäss vorgesehenen Operationen zur Bestimmung der Horizontalverschiebung der einzelnen Funktionsblöcke des Funktionsplans und

Fig. 7 ein drittes Flussdiagramm zur Erläuterung der erfindungsgemäss vorgesehenen Operationen zur Bestimmung der Vertikalverschiebung der einzelnen, die Teilsequenzen darstellenden Teilfunktionspläne.

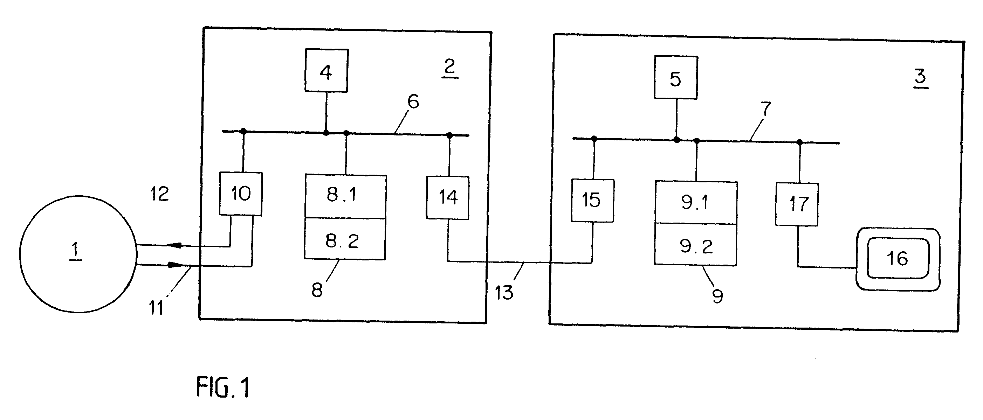

In Fig 1 ist mit 1 ein einfach durch einen Kreis schematisch dargestellter technischer Prozess bezeichnet, der von einer speicherprogrammierbaren Steuerung 2 überwacht und gesteuert wird. An die speicherprogrammierbare Steuerung 2 ist ein Programmiergerät 3 angeschlossen. Sowohl die speicherprogrammierbare Steuerung 2 als auch das Programmiergerät 3 enthalten einen Digitalrechner. Die Digitalrechner bestehen jeweils aus einer Zentraleinheit 4 bzw. 5, die über Busse 6 bzw. 7 mit Arbeitsspeichern 8 bzw. 9 in Verbindung stehen. An den Bus 6 der speicherprogrammierbaren Steuerung 2 ist über eine erste Ein/Ausgabe-Einheit 10 der technische Prozess 1 über Eingangs 11- und Ausgangsleitungen 12 angekoppelt. Die Verbindung zwischen der speicherprogrammierbaren Steuerung 2 und dem Programmiergerät 3 ist über eine Leitung 13 hergestellt. Die Leitung 13 ist über Ein/Ausgabe-Einheiten 14 bzw. 15 an die Busse 6 und 7 angeschlossen. Diese Verbindung ist vorzugsweise als Steckverbindung ausgeführt, damit das Programmiergerät 3 von der speicherprogrammierbaren Steuerung 2 leicht getrennt werden kann. An den Bus 7 des Programmiergeräts 3 ist schliesslich noch eine graphische Anzeigevorrichtung 16, wieder über eine Ein/Ausgabe-Einheit 17, angeschlossen. Zu Klarstellung sei bemerkt, dass selbstverständlich sämtliche in Fig. 1 eingezeichneten Leitungen aus einer Vielzahl von parallelen Leitungen bestehen können und in der Regel auch bestehen werden.

Bei der in Fig. 1 dargestellten Anordnung arbeitet die Zentraleinheit 4 des Digitalrechners in der speicherprogrammierbaren Steuerung 2 in üblicher Weise zyklisch ein Steuerprogramm ab, welches in einem ersten Teil 8.1 des Arbeitsspeichers 8 enthalten ist. Sie wird dabei beispielsweise von am technischen Prozess 1 installierten, in Fig. 1 nicht dargestellten Messgeräten gelieferte Ist-Werte über die Eingangsleitungen 11 und die Ein/Ausgabe-Einheit 10 sowie den Bus 6 in einen zweiten Teil 8.2 des Arbeitsspeichers 8 einlesen, mit dort zuvor abgespeicherten Soll-Werten in Verbindung setzen, daraus Stell-Werte ableiten und diese wiederum über den Bus 6 und die Ein/Ausgabe-Einheit 10 sowie die Ausgangsleitungen 12 dem technischen Prozess 1, insbesondere dort installierten, in Fig. 1 ebenfalls nicht dargestellten Stellgliedern, zuführen. Das Programmiergerät 3 dient zur Erstellung und Wartung sowie zur graphischen Darstellung des im ersten Teil 8.1 des Arbeitsspeichers 8 der speicherprogrammierbaren Steuerung 2 enthaltenen Steuerprogramms. Alle für die Zentraleinheit 5 des Digitalrechners im Programmiergerät 3 zu diesem Zweck erforderlichen Anweisungen sind in einem Betriebssystem zusammengefasst, welches in einem ersten Teil 9.1 des Arbeitsspeichers 9 enthalten ist. Das Steuerprogramm der speicherprogrammierbaren Steuerung 2 kann beispielsweise in einem zweiten Teil 9.2 des Arbeitsspeichers 9 erstellt und nach seiner Fertigstellung in den ersten Teil 8.1 des Arbeitsspeichers 8 der speicherprogrammierbaren Steuerung 2 überkopiert werden. Ein bereits im ersten Teil 8.1 des Arbeitsspeichers 8 existierendes Steuerprogramm kann zu Wartungszwecken in den zweiten Teil 9.2 des Arbeitsspeichers 9 im Programmiergerät 3 kopiert, dort verändert und in geänderter Form wieder zurückkopiert werden. Das Programmiergerät 3 muss bei allen Kopiervorgängen selbstverständlich über die Leitung 13 mit der speicherprogrammierbaren Steuerung 2 verbunden sein. Im übrigen arbeiten beide Geräte jedoch völlig unabhängig voneinander.

Aus dem im zweiten Teil 9.2 des Arbeitsspeichers 9 im Programmiergerät 3 abgespeicherten Steuerprogramm der speicherprogrammierbaren Steuerung 2, das ja für die Zentraleinheit 5 des Programmiergeräts 3 kein abzuarbeitendes Programm, sondern einen zu bearbeitenden Datensatz darstellt, erzeugt diese unter Ausführung von Operationen in ihrem Betriebssystem, auf die die Erfindung gerichtet ist, die gewünschte Funktionsplandarstellung auf der graphischen Anzeigevorrichtung 16.

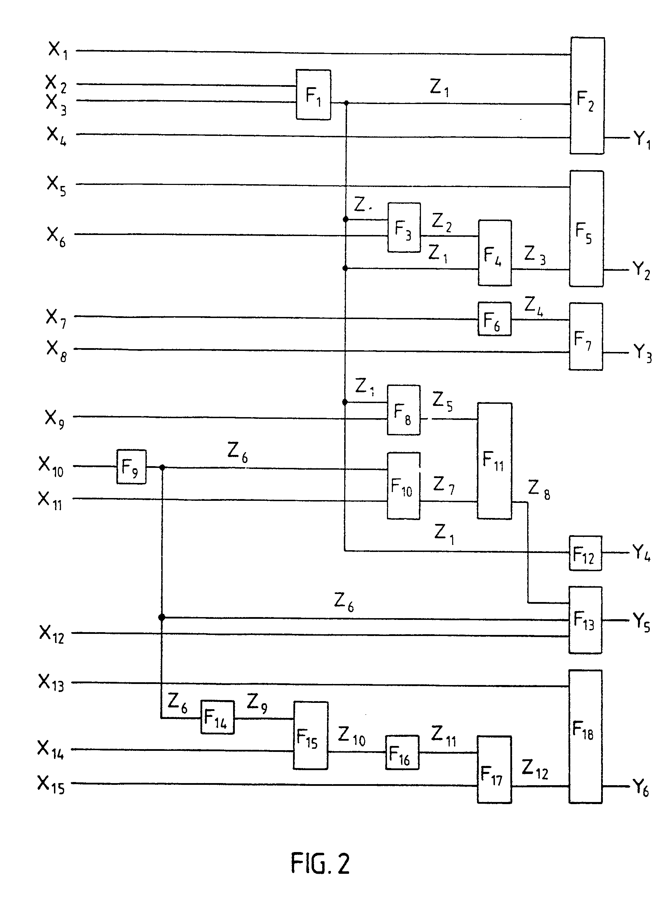

Fig. 2 zeigt ein Beispiel für eine Funktionsplandarstellung eines Steuerprogramms einer speicherprogrammierbaren Steuerung. Der Funktionsplan besteht aus rechteckigen Funktionsblöcken $F_i$ mit $i$ = 1 bis 18. Die Funktionsblöcke $F_i$ können beliebige Funktionsblöcke z. B. nach DIN 40 700, Teil 14/IEC 117 - 15 und DIN 40 719/IEC 113 - 7 sein. Der Funktionsplan ist von links nach rechts zu lesen, d.h. die linke Seite ist die Eingangsseite und die rechte Seite die Ausgangsseite der Funktionsblöcke $F_i$. Von links in den Funktionsplan hinein verlaufen in horizontaler Richtung Signale $x_i$ mit $i$ = 1 bis 15, von denen beispielsweise ein Teil den vom technischen Prozess 1 abgeleiteten Ist-Werten und ein anderer Teil den Soll-Werten entsprechen können. Den Funktionsplan nach rechts verlassen ebenfalls in horizontaler Richtung Signale $y_i$ + mit $i$ = 1 bis 6, welche beispielsweise den Stell-Werten für den technischen Prozess 1 entsprechen können. Schliesslich enthält der Funktionsplan Signale $z_i$

mit i = 1 bis 12, welche ausschliesslich zwischen einzelnen Funktionsblöcken $F_i$ verlaufen und die weder vom linken Rand in den Funktionsplan hineinlaufen noch diesen nach rechts verlassen. Die Signale $z_i$ werden im Funktionsplan selbst erzeugt und sind sowohl Ausgangssignale der sie erzeugenden Funktionsblöcke $F_i$ als auch Eingangssignale von anderen Funktionsblöcken $F_i'$. So ist z. B. das Ausgangssignal $z_1$ des Funktionsblocks $F_1$ eines der Eingangssignale des Funktionsblocks $F_2$. Der Funktionsblock $F_2$ hängt daher signalmässig vom Funktionsblock $F_1$ ab. Das Ausgangssignal $z_1$ des Funktionsblocks $F_1$ dient jedoch ausser dem Funktionsblock $F_2$ auch noch den Funktionsblöcken $F_3$, $F_4$, $F_8$ sowie $F_{12}$ als Eingangssignal. Diese signalmässige Mehrfachabhängigkeit von Funktionsblöcken $F_i$ ist im Funktionsplan nach Fig. 2 mittels Signalverzweigungen und Signalkreuzungen dargestellt. Der Funktionsplan nach Fig. 2 ist daher von der Art, wie er nach der Erfindung automatisch erzeugt werden soll. Eine weitere signalmässige Mehrfachabhängigkeit ergibt sich im Funktionsplan nach Fig. 2 im übrigen hinsichtlich des Ausgangssignals $z_6$ des Funktionsblocks $F_9$. Das Ausgangssignal $z_6$ trägt darüber hinaus zur Bildung der Ausgangs- bzw. Eingangssignale $z_9$ bis $z_{12}$ sowie $y_6$ bei. Sämtliche Funktionsblöcke $F_{14}$ bis $F_{18}$ hängen deshalb signalmässig vom Funktionsblock $F_9$ ab.

Im folgenden werden nun die erfindungsgemässen Operationen zur automatischen Erzeugung von Funktionsplänen nach der Art von Fig. 2 beschrieben. Diese Operationen sind, wie bereits ausgeführt, im Betriebssystem für die Zentraleinheit 5 im Digitalrechner des Programmiergeräts 3 vorzusehen.

Es wird davon ausgegangen, dass das Steuerprogramm für die speicherprogrammierbare Steuerung 2, für das ein Funktionsplan erzeugt werden soll, im zweiten Teil 9.2 des Arbeitsspeichers 9 im Programmiergerät 3 maschinenlesbar gespeichert ist. Es wird weiter davon ausgegangen, dass im Steuerprogramm für jede durch einen Funktionsblock $F_i$ im Funktionsplan darzustellende Signalverarbeitungsfunktion ein Funktionsmodul existiert, welcher mit einer Identifikation versehen und mittels eines Funktionsaufrufs aufrufbar ist. Dabei sollen die Funktionsaufrufe die Identifikation des jeweils aufzurufenden Funktionsmoduls sowie dessen den Eingangs- und Ausgangssignalen im Funktionsplan entsprechende Eingangs- und Ausgangsparameter enthalten.

Als erste Operation muss das Steuerprogramm von Anfang bis Ende auf Funktionsaufrufe untersucht werden. Jeder aufgefundene Funktionsaufruf wird bei der Suchprozedur sequentiell, d.h. in der Reihenfolge seines Auftretens im Steuerprogramm zusammen mit der Liste mit den ihm zugehörigen Eingangs- und Ausgangsparametern auf eine Datei geschrieben. Die Datei kann beispielsweise neben dem Steuerprogramm im zweiten Teil 9.2 des Arbeitsspeichers 9 im Programmiergerät 3 lokalisiert sein.

Aus dem dem Funktionsplan von Fig. 2 zugrundeliegenden Steuerprogramm würde sich auf der Datei folgende Sequenz von Funktionsaufrufen ergeben:

| $F_1$ | $(x_2, x_3, z_1)$ |
| $F_2$ | $(x_1, z_1, x_4, y_1)$ |
| $F_3$ | $(z_1, x_6, z_2)$ |
| $F_4$ | $(z_2, z_1, z_3)$ |
| $F_5$ | $(x_5, z_3, y_2)$ |
| $F_6$ | $(x_7, z_4)$ |
| $F_7$ | $(z_4, x_8, y_3)$ |
| $F_8$ | $(z_1, x_9, z_5)$ |
| $F_9$ | $(x_{10}, z_6)$ |
| $F_{10}$ | $(z_6, x_{11}, z_7)$ |
| $F_{11}$ | $(z_5, z_7, z_8)$ |
| $F_{12}$ | $(z_1, y_4)$ |
| $F_{13}$ | $(z_8, z_6, x_{12}, y_5)$ |
| $F_{14}$ | $(z_6, z_9)$ |
| $F_{15}$ | $(z_9, x_{14}, z_{10})$ |
| $F_{16}$ | $(z_{10}, z_{11})$ |
| $F_{17}$ | $(z_{11}, x_{15}, z_{12})$ |
| $F_{18}$ | $(x_{13}, z_{12}, y_6)$ |

Vorstehend wurde für die Bezeichnung der Funktionsaufrufe die Bezeichnung der Funktionsblöcke $F_i$ und für die Bezeichnung der Parameter die Bezeichnung der Signale $x_i$, $y_i$ und $z_i$ aus Fig. 2 übernommen. Diese Bezeichnungsweise wird auch im folgenden beibehalten.

Als nächstes muss die Datei durch Zuordnung der Funktionsaufrufe $F_i$ zu total geordneten Teilsequenzen von Funktionsaufrufen $F_i$ zerlegt werden. Beginnend mit dem letzten Funktionsaufruf $F_{imax}$ wird jeder Funktionsaufruf $F_i$, dessen Ausgangsparameter $z_i$ nicht zur Bildung eines Eingangsparameters $z'_i$ eines der jeweiligen Teilsequenz bereits zugeordneten Funktionsaufrufs $F'_i$ beiträgt, einer neuen Teilsequenz zugeordnet.

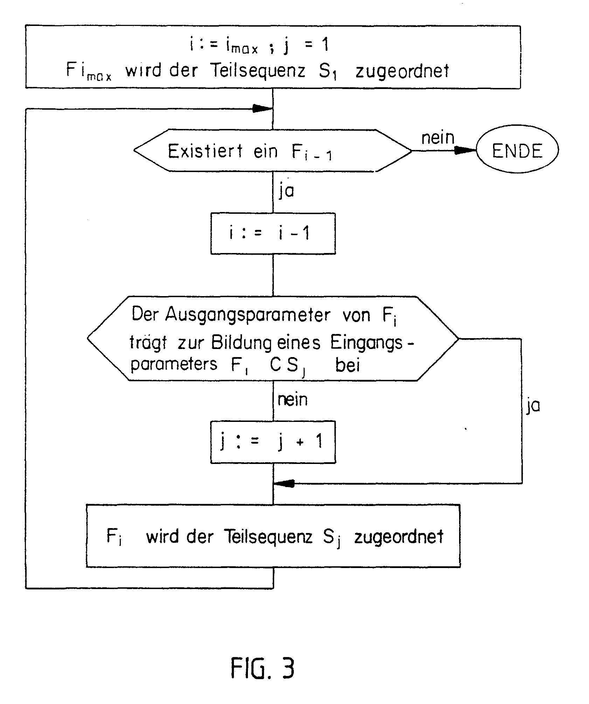

Fig. 3 zeigt ein Flussdiagramm für diese Zerlegungsoperation. Die durch die Zerlegung entstehenden Teilsequenzen sind mit $S_j$ bezeichnet. Der Index i der Funktionsaufrufe $F_i$ wird zu Beginn der Operation gleich $i_{max}$, d.h. gleich dem grössten auf der Datei vorkommenden Index der Funktionsaufrufe $F_i$ gesetzt, im Beispiel des Funktionsplans nach Fig. 2 also gleich 18. Der Index j der Teilsequenzen $S_j$ wird zu Beginn der Operation gleich 1 gesetzt. Nun wird mittels der Abfrage "Existiert ein $F_{i-1}$" in eine Schleife eingetreten. Existiert ein Funktionsaufruf $F_{i-1}$ auf der Datei, so wird die Schleife durchlaufen; ist dies z. B. nach ständiger Decrementierung des Index i innerhalb der Schleife nach dem Erreichen des ersten Funktionsaufrufs $F_1$ auf der Datei nicht mehr der Fall, so wird die Operation beendet. Innerhalb der Schleife wird, wie gerade ausgeführt, der Index i zunächst um den Wert 1 decrementiert; sodann wird abgefragt, ob der Ausgangsparameter des Funktionsaufrufs mit dem jetzt aktuellen Wert des Parameters i zur Bildung eines Eingangsparameters eines der Teilsequenz mit dem jetzt gerade aktuellen Wert des Index j bereits zugewiesenen Funktionsaufrufs $F_i$ ($F_i \in S_j$) beiträgt. Ist dies der Fall, so wird der Funktions-

aufruf $F_i$ der gleichen Teilsequenz $S_j$ zugeordnet wie der Funktionsaufruf $F_{i+1}'$ zu Beginn also der Teilsequenz $S_1$. Ist dies dagegen nicht der Fall, so wird der Index j zunächst um den Wert 1 incrementiert und der Funktionsaufruf $F_i$ der dann neuen Teilsequenz $S_j$ zugeordnet.

Der besseren Verständlichkeit wegen werden die Indices der Teilsequenzen $S_j$ nach Abschluss der Zerlegungsoperation noch umgekehrt, d.h. die Teilsequenz $S_j$ mit dem grössten sich aus der Zerlegungsoperation ergebenden Index $j_{max}$ wird gleich $S_1$, die mit dem nächstkleineren Index $j_{max-1}$ gleich $S_2$ usw. gesetzt. Dies ist in Fig. 3 nicht dargestellt.

Die vorstehend als Beispiel aufgeführte Datei, die dem Funktionsplan nach Fig. 2 zugrundeliegt, würde nach der beschriebenen Methode und der Umkehrung der Indices j in folgende sieben Teilsequenzen $S_j$ zerlegt:

| | |
|---|---|
| $S_1$: | $F_1, F_2$ |
| $S_2$: | $F_3, F_4, F_5$ |
| $S_3$: | $F_6, F_7$ |
| $S_4$: | $F_8, F_9, F_{10}, F_{11}$ |
| $S_5$: | $F_{12}$ |
| $S_6$: | $F_{13}$ |
| $S_7$: | $F_{14}, F_{15}, F_{16}, F_{17}, F_{18}$ |

Die Teilsequenzen stellen Teilfunktionspläne dar, innerhalb derer die Funktionsblöcke $F_i$ hierarchisch miteinander verknüpft sind bzw. signalmässig voneinander abhängen.

Im erfindungsgemäss erzeugten Funktionsplan werden die den Teilsequenzen $S_j$ zugehörigen Teilfunktionspläne untereinander angeordnet dargestellt.

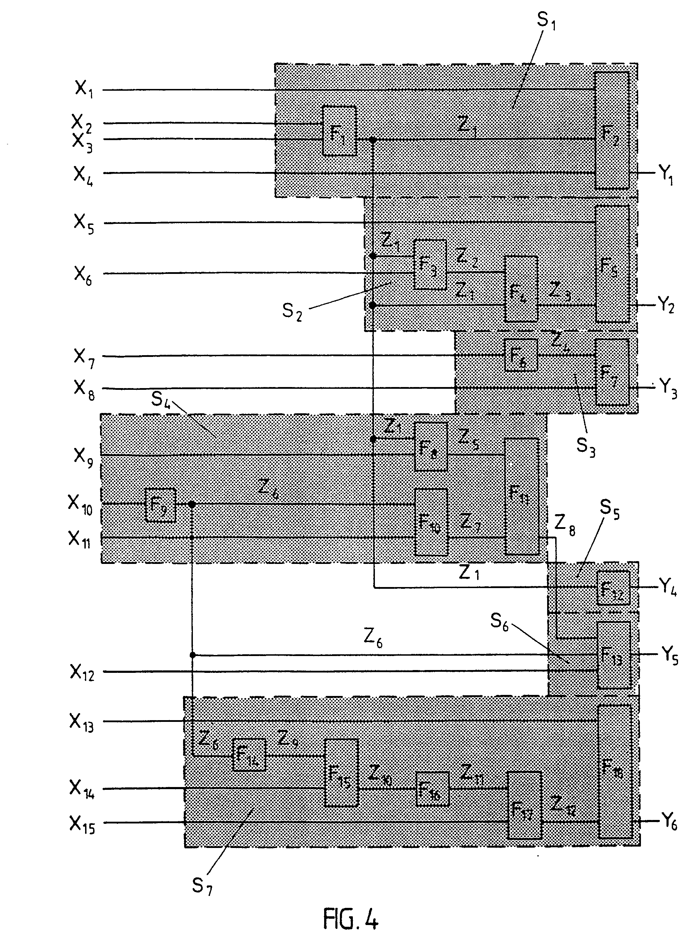

Fig. 4 zeigt den Funktionsplan nach Fig. 2, jedoch sind die Teilsequenzen $S_1$ bis $S_7$ zur besseren Erkennbarkeit grau unterlegt.

Nach der Zerlegung der Datei in die Teilsequenzen $S_j$ auf die beschriebene Art werden die normierten horizontalen Ausdehnungen der graphischen Darstellung der Funktionsblöcke $F_i$ sowie ihre normierte Horizontalverschiebung in der graphischen Darstellung bestimmt. Diese Ausdehnungen und Verschiebungen sind deshalb als normiert bezeichnet, weil sie die Grösse der Ausdehnung und Verschiebung der einzelnen Funktionsblöcke in der graphischen Darstellung nur normiert, d. h. bis auf einen gemeinsamen, z. B. von der Grösse der Anzeigevorrichtung 16 abhängigen Skalierungsfaktor festlegen.

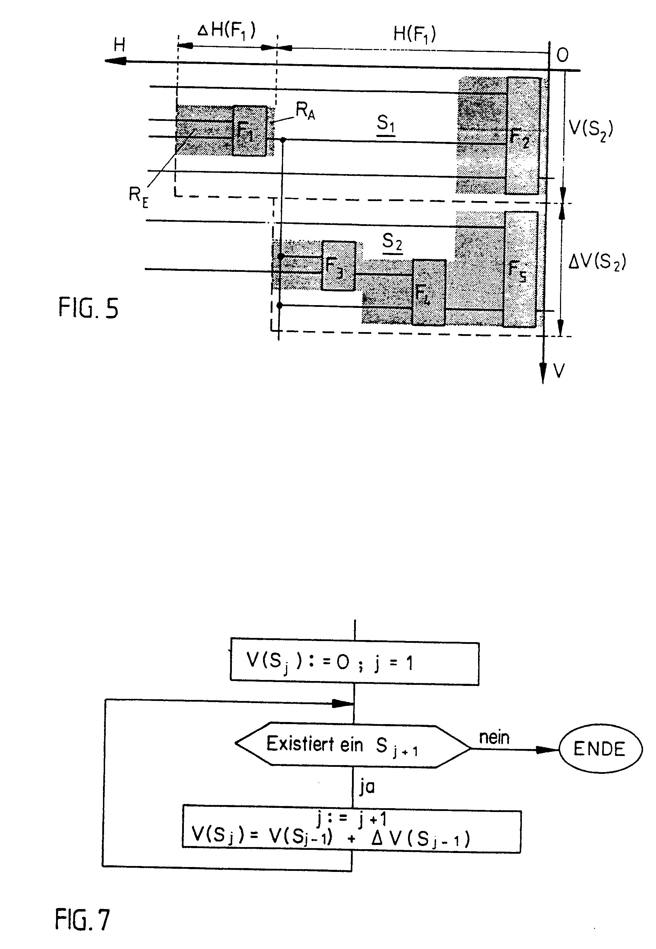

In Fig. 5, in der ein Ausschnitt der rechten oberen Bildecke des Funktionsplan nach Fig. 2 dargestellt ist und welcher nur die den Teilsequenzen $S_1$ und $S_2$ zugeordneten Funktionsblöcke $F_1$ bis $F_5$ zeigt, ist am Beispiel des Funktionsblocks $F_1$ dessen normierte, mit $\Delta H(F_1)$ bezeichnete horizontale Ausdehnung verdeutlicht. Diese bestimmt sich allgemein aus der normierten horizontalen Ausdehnung des jeweiligen Funktionsblocks $F_i$ selbst zuzüglich einer eingangsseitig vorgelagerten $R_E$ sowie einer ausgangsseitig nachfolgenden Randzone $R_A$. Ebenfalls am Beispiel des Funktionsblocks $F_1$ ist dessen normierte, mit $H(F_1)$ bezeichnete Horizontalverschiebung dargestellt, welche sich jeweils vom rechten Rand des Funktionsplans entlang der mit H bezeichneten horizontalen Achse bis zum rechten Rand des jeweiligen Funktionsblocks $F_i'$ genauer bis zum Beginn seiner ausgangsseitigen Randzone $R_A'$ bemisst.

Für die normierten horizontalen Ausdehnungen $\Delta H(F_i)$ der Funktionsblöcke $F_i$ wird im zweiten Teil 9.2 des Arbeitsspeichers 9 im Programmiergerät 3, ggfs. auch auf der vorgenannten Datei, ein erster Satz von Variablen vorgesehen und den einzelnen Funktionsaufrufen $F_i$ zugeordnet. Diese Variablen werden im folgenden ebenfalls mit $\Delta H(F_i)$ bezeichnet. Den Variablen $\Delta H(F_i)$ werden die gewünschten Werte der normierten horizontalen Ausdehnungen der Funktionsblöcke $F_i$ nach Wahl einfach zugewiesen, wobei deren Grösse von der Art der gewählten Funktionsblöcke $F_i$ abhängt. Im Beispiel der Fig. 2, 4 und 5 haben alle Funktionsblöcke $F_i$ die gleiche relative horizontale Ausdehnung $\Delta H(F_i)$.

Für die normierten Horizontalverschiebungen $H(F_i)$ der Funktionsblöcke $F_i$ wird entsprechend ein ebenfalls den Funktionsaufrufen $F_i$ zugeordneter zweiter Satz von Variablen vorgesehen. Auch für die Variablen dieses zweiten Satzes werden wieder die Bezeichnungen $H(F_i)$ der Vertikalverschiebungen selbst übernommen. Die Werte der Variablen $H(F_i)$ entsprechen der grössten der Summen, welche sich für den jeweils betrachteten Funktionsaufruf $F_i$ aus den Werten der Variablen $\Delta H(F_i)$ des ersten Satzes bilden lassen, welchen den von diesem Funktionsaufruf $F_i$ parametermässig abhängigen Funktionsaufrufen $F_i'$ zugeordnet sind. "Parametermässig abhängig" bedeutet dabei dasselbe wie das vorstehend definierte "signalmässig abhängig".

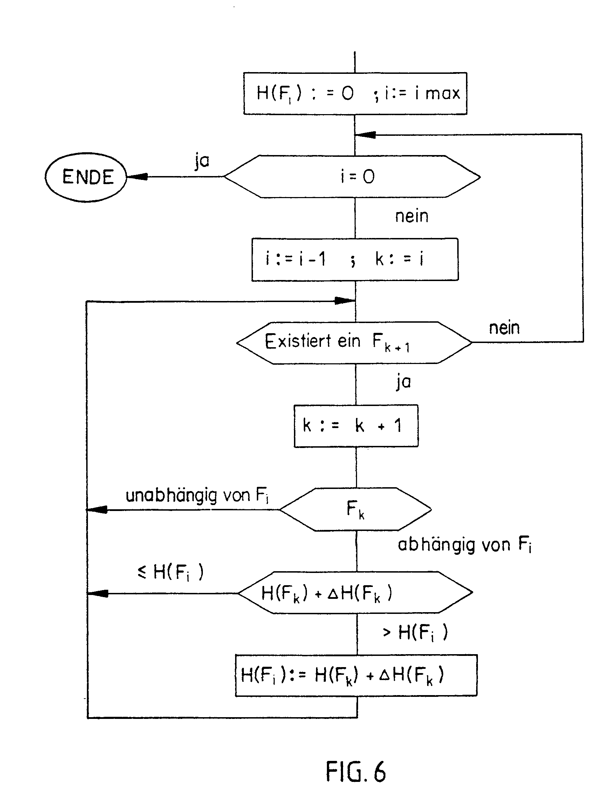

Zur Verdeutlichung der Art und Weise der Bestimmung dieser Werte wird auf das Flussdiagramm von Fig. 6 Bezug genommen. Gemäss dem obersten Kasten des Flussdiagramms wird sämtlichen Variablen $H(F_i)$ des zweiten Satzes zunächst der Wert 0 zugewiesen. Dies ist durch $H(F_i)$: = 0 zum Ausdruck gebracht. Sodann wird der Index i gleich $i_{max}$ gesetzt. Ähnlich wie beim Flussdiagramm von Fig. 3 wird sodann mittels der Abfrage "i = 0" in eine Schleife eingetreten, die erst verlassen wird, wenn der innerhalb der Schleife bei jedem Durchlauf decrementierte Wert des Index i den Wert 0 erreicht hat. In diesem Fall wird die Operation beendet.

Für alle Funktionsaufrufe $F_i$ des Funktionsplans ist dann eine Horizontalverschiebung $H(F_1)$ bestimmt. Innerhalb der Schleife wird als erstes die Decrementierung des Index i um den Wert 1 vorgenommen und danach ein weiterer Index k für die Funktionsaufrufe gleich dem Index i gesetzt. Sodann wird mit einer Abfrage "Existiert ein $F_{k+1}$" in eine bezüglich der erstgenannten Schleife innere Schleife eingetreten, die zur Abfrage "k = 0" der ersten äusseren Schleife hin verlassen wird, wenn nach ständiger Incrementierung des Index k in der inneren Schleife auf der Datei kein Funktionsaufruf $F_{k+1}$ mehr existiert, wenn im

Beispielsfalle der Funktionsaufruf $F_{18}$ also erreicht ist. Nach der Incrementierung des Index k um den Wert 1 innerhalb der Schleife wird abgefragt, ob der Funktionsaufruf $F_k$ parametermässig abhängig oder unabhängig vom Funktionsaufruf $F_i$ ist. Ist der Funktionsaufruf $F_k$ unabhängig vom Funktionsaufruf $F_i'$ so wird direkt zum Anfang der inneren Schleife zurückgekehrt. Ist der Funktionsaufruf $F_k$ dagegen vom Funktionsaufruf $F_i$ abhängig, so wird eine weitere Abfrage durchgeführt, ob nämlich die Summe aus der normierten Horizontalverschiebung $H(F_k)$ des Funktionsblocks $F_k$ und seiner normierten horizontalen Ausdehnung $\Delta H(F_k)$ grösser oder kleiner gleich der normierten Horizontalverschiebung $H(F_i)$ des Funktionsblocks $F_i$ ist. Im letztgenannten Fall wird wiederum direkt zum Anfang der inneren Schleife zurückgekehrt. Im erstgenannten Fall wird die normierte Horizontalverschiebung $H(F_i)$ des Funktionsblocks $F_i$ gleich der genannten Summe gesetzt und erst dann zum Anfang der inneren Schleife zurückgekehrt.

Besonders anschaulich wird die Art der Bestimmung der normierten Horizontalverschiebung $H(F_i)$ der Funktionsblöcke $F_i$ anhand von Fig. 5. Unter Vernachlässigung der in Fig. 5 auch gar nicht dargestellten Funktionsblöcke $F_6$ bis $F_{18}$ sei einmal der Index $i_{max} = 5$ gesetzt. Es wird dann beim ersten Durchlauf der äusseren Schleife die normierte Horizontalverschiebung $H(F_4)$ des Funktionsblocks $F_4$ bestimmt.

Diese ergibt sich zu $\Delta H(F_5)$, da der Funktionsblock $F_5$ vom Funktionsblock $F_4$ parametermässig abhängig ist und die Summe aus der ursprünglich gleich Null gesetzten normierten Horizontalverschiebung $H(F_5)$ des Funktionsblocks $F_5$ und seiner nicht verschwindenden normierten horizontalen Ausdehnung $\Delta H(F_5)$ natürlich grösser ist als die anfangs gleichfalls Null gesetzte normierte Horizontalverschiebung $H(F_4)$ des Funktionsblocks $F_4$. Im zweiten Durchlauf der äusseren Schleife wird die normierte Horizontalverschiebung $H(F_3)$ des Funktionsblocks $F_3$ bestimmt. Diese ergibt sich gleich beim ersten Durchlauf der inneren Schleife als Summe aus der normierten Horizontalverschiebung $H(F_4)$ des Funktionsblocks $F_4$ und seiner normierten horizontalen Ausdehnung $\Delta H(F_4)$. An diesem Wert für die normierte Horizontalverschiebung $H(F_4)$ ändert sich beim zweiten Durchlauf der inneren Schleife nichts mehr, da die im zweiten Durchlauf ermittelte Summe aus der Horizontalverschiebung $H(F_5)$ des Funktionsblocks $F_5$ und seiner normierten horizontalen Ausdehnung $\Delta H(F_5)$ kleiner als die im ersten Durchlauf ermittelte Horizontalverschiebung $H(F_4)$ ist. Bei der im dritten Durchlauf der äusseren Schleife ermittelten normierten Horizontalverschiebung $H(F_2)$ des Funktionsblocks $F_2$ kommt es nicht zu einer Summenbildung, da keiner der Funktionsblöcke $F_3$ bis $F_5$ von $F_2$ abhängt. Für den Funktionsblock $F_2$ bleibt es daher beim anfänglich zugwiesenen Wert Null für die normierte Horizontalverschiebung $H(F_2)$. Beim letzten im gewählten Beispiel erforderlichen Durchlauf der äusseren Schleife wird die normierte Horizontalverschiebung $H(F_1)$ des Funktionsblocks $F_1$ beim ersten Durchlauf der inneren Schleife zunächst gleich der normierten horizontalen Ausdehnung $\Delta H(F_2)$ des Funktionsblocks $F_2$ gesetzt. Beim zweiten Durchlauf der inneren Schleife wird der normierten Horizontalverschiebung $H(F_1)$ dann jedoch die Summe aus der normierten Horizontalverschiebung $H(F_3)$ des Funktionsblocks $F_3$ und seiner normierten horizontalen Ausdehnung $\Delta H(F_3)$ zugewiesen, da der Funktionsblock $F_3$ vom Funktionsblock $F_1$ abhängig ist und die genannte Summe grösser ist als die normierte Horizontalverschiebung $H(F_1)$, die sich im ersten Durchlauf der inneren Schleife aufgrund der normierten horizontalen Ausdehnung $\Delta H(F_2)$ des Funktionsblocks $F_2$ ergab. Bei den weiteren im Beispielsfall erforderlichen zwei Durchläufen der inneren Schleife zur Berücksichtigung auch der Funktionsblöcke $F_4$ und $F_5$ ändert sich an der normierten Horizontalverschiebung $H(F_1)$ des Funktionsblocks $F_1$ nichts mehr, da die bezüglich dieser Funktionsblöcke gebildeten Summen jeweils kleiner sind als die bezüglich des Funktionsblocks $F_3$ gebildete Summe.

Das Ergebnis der vorstehend beschriebenen erfindungsgemässen Bestimmungsmethode der Horizontalverschiebungen $H(F_i)$ der Funktionsblöcke $F_i$ kann auch auf folgende Weise ausgedrückt werden:

Ein Funktionsblock $F_i'$ von dem kein anderer Funktionsblock $F_i'$ abhängt, erhält eine Horizontalverschiebung $H(F_i)$ von 0.
Ein Funktionsblock $F_i'$ von dem andere Funktionsblöcke $F_i'$ abhängen, schliesst sich im Funktionsplan dem am weitesten links endenden von ihm abhängigen Funktionsblock $F_i'$ an.

Es müssen nunmehr noch die normierten vertikalen Ausdehnungen der die Teilsequenzen $S_j$ darstellenden Teilfunktionspläne sowie deren normierte Vertikalverschiebung in der graphischen Darstellung ermittelt werden. In Fig. 5 ist am Beispiel der Teilsequenz $S_2$ deren normierte, mit $\Delta V(S_2)$ bezeichnete vertikale Ausdehnung sowie deren normierte, mit $V(S_2)$ bezeichnete Vertikalverschiebung dargestellt.

Für die normierten vertikalen Ausdehnungen $\Delta V(S_j)$ wird im zweiten Teil 9.2 des Arbeitsspeichers 9, ggfs. wiederum auf der Datei, ein den Teilsequenzen $S_j$ zugeordneter dritter Satz von Variablen vorgesehen. Diese Variablen werden der bisherigen Übung entsprechend, ebenfalls mit $\Delta V(S_j)$ bezeichnet. Für die normierten Vertikalverschiebungen $V(S_j)$ der Teilsequenzen $S_j$ wird entsprechend ein vierter Satz von Variablen vorgesehen, für die im folgenden die Bezeichnung $V(S_j)$ übernommen wird.

Die Werte der relativen vertikalen Ausdehnungen $V(S_j)$, die den Variablen des dritten Satzes erfindungsgemäss zugewiesen werden, entsprechen jeweils der doppelten Anzahl der Funktionsaufrufe $F_i$ in der jeweiligen Teilsequenz $S_j$ zuzüg-

lich der Anzahl der nicht in der jeweiligen Teilsequenz selbst erzeugten Eingangsparameter $x_i$, $z_i$ vermindert um die Anzahl der in der jeweiligen Teilsequenz $S_j$ selbst erzeugten ersten und letzten Eingangsparameter $z_i$ in den Parameterlisten der einzelnen Funktionsaufrufe $F_i$ in der jeweiligen Teilsequenz $S_j$.

Die Berechnung dieser Werte sei am Beispiel der Teilsequenz $S_4$ näher erläutert. Auf der Datei hat der der Teilsequenz entsprechende Zerlegungsabschnitt folgende Struktur:

$F_8$     $(z_1, x_9, z_5)$
$F_9$     $(x_{10}, z_6)$
$F_{10}$   $(z_6, x_{11}, z_7)$
$F_{11}$   $(z_5, z_7, z_8)$

Die Anzahl der Funktionsaufrufe $F_i$ in der Teilsequenz $S_4$ ist gleich 4. Diese Zahl ist doppelt zu nehmen, was 8 ergibt. Wie aus der Struktur des Zerlegungsabschnitts direkt, aber auch aus den Fig. 2 oder 4 zu ersehen ist, werden nur die Eingangsparameter $z_1$, sowie $x_9$ bis $x_{11}$, insgesamt also nur 4 Eingangsparameter der drei Funktionsaufrufe $F_8$, $F_9$ und $F_{10}$ nicht in der Teilsequenz $S_4$ selbst erzeugt. Zum zuvor ermittelten Wert 8 ist daher 4 zu addieren, was 12 ergibt. Von den ersten Eingangsparametern $z_i$ in den Parameterlisten der Funktionsaufrufe $F_8$ bis $F_{11}$ sind nur die Eingangsparameter $z_6$ des Funktionsaufrufs $F_{10}$ und $z_5$ des Funktionsaufrufs $F_{11}$ in der Teilsequenz $S_4$ selbst erzeugt. Von den letzten Eingangsparametern $z_i$ ist in den Parameterlisten der Funktionsaufrufe $F_8$ bis $F_{11}$ nur der Eingangsparameter $z_7$ des Funktionsaufrufs $F_{11}$ in der Teilsequenz $S_4$ selbst erzeugt. Die Anzahl der in der Teilsequenz $S_4$ selbst erzeugten ersten und letzten Eingangsparameter $z_i$ in den Parameterlisten der Funktionsaufrufe $F_8$ bis $F_{11}$ ist also gleich 3. Dieser Wert 3 ist von dem zuvor ermittelten Wert 12 abzuziehen, was 9 als den endgültigen Wert der normierten vertikalen Ausdehnung $\Delta V(S_4)$ der Teilsequenz $S_4$ ergibt. Wie sich anhand der Fig. 2, 4 oder 5 leicht nachvollziehen lässt, entspricht die normierte vertikale Ausdehnung $\Delta V(S_j)$ der Teilsequenzen $S_j$ gerade einem Vielfachen des minimalen Abstandes, der jeweils zwischen zwei Signalen eingehalten wird. Zu erwähnen ist noch, dass für den Fall, dass in der Parameterliste eines Funktionsaufrufs $F_i$ nur ein einziger Eingangsparameter vorhanden und dieser in der jeweiligen Teilsequenz selbst erzeugt ist, dieser als erster und letzter Eingangsparameter, also doppelt zu zählen ist.

Als letzte Operation müssen den Variablen $V(S_j)$ des vierten Satzes die ebenso bezeichneten normierten Vertikalverschiebungen der Teilsequenzen $S_j$ zugewiesen werden.

Diese ergeben sich jeweils aus der Summe der Werte der Variablen $\Delta V(S_j)$ des dritten Satzes, welche den in der Sequenz der Teilsequenzen $S_j$ auf der Datei der jeweiligen Teilsequenz $S_j$ vorangehenden Teilsequenzen $S'_j$ zugeordnet sind.

Auch diese Operation soll anhand eines Flussdiagramms dargestellt werden, welches Fig. 7 zeigt.

Gemäss dem obersten Kasten von Fig. 7 wird zunächst sämtlichen Variablen $V(S_j)$ des vierten Satzes der Wert 0 zugewiesen, was durch $V(S_j) := 0$ ausgedrückt ist, und dem Index j der Wert 1. Sodann wird durch die Abfrage "Existiert ein $S_{j+1}$" eine Schleife mit Laufindex j eröffnet. Solange eine Teilsequenz $S_{j+1}$ auf der Datei vorhanden ist wird die Schleife durchlaufen; nach dem Erreichen der Teilsequenz mit dem grössten Index j wird die Schleife und damit die ganze Operation beendet. Innerhalb der Schleife wird zunächst der Index j um den Wert 1 incrementiert und sodann die normierte Vertikalverschiebung $V(S_j)$ der dann neuen Teilsequenz $S_j$ gleich der Summe aus der normierten Vertikalverschiebung $V(S_{j-1})$ ihrer unmittelbaren Vorgängerin in der Sequenz der Datei und deren normierter vertikaler Ausdehnung $\Delta V(S_{j-1})$ gesetzt.

Nach Durchführung der vorbeschriebenen Operationen nach der Erfindung sind die Voraussetzungen dafür geschaffen, den gewünschten Funktionsplan mit Signalverzweigungen und Signalkreuzungen auf der Anzeigevorrichtung 16 zu erzeugen.

Abschliessend soll noch erwähnt werden, dass in analoger Weise mit prinzipiell gleichen Operationen Funktionspläne erzeugt werden können, welche von oben nach unten zu lesen sind oder bei welchen die Funktionsblöcke statt rechtsbündig, linksbündig angeordnet sind.

## Patentansprüche

Programmiergerät (3) zur Erstellung, Wartung und graphischen Darstellung des Steuerprogramms einer speicherprogrammierbaren Steuerung (2) mit einem deren Steuerprogramm maschinenlesbar speichernden Digitalrechner und einer Anzeigevorrichtung (16) zur Darstellung eines vom Betriebssystem des Digitalrechners erzeugten und aus signalverarbeitenden Funktionsblöcken ($F_i$) aufgebauten Funktionsplans des Steuerprogramms, wobei das Steuerprogramm für jede durch einen Funktionsblock ($F_i$) dargestellte Signalverarbeitungsfunktion ein diesem Funktionsblock ($F_i$) zugeordnetes Funktionsmodul aufweist sowie einen dieses Funktionsmodul aufrufenden und Ein- und Ausgangsparameter ($x_i$, $y_i$, $z_i$), welchen Ein- und Ausgangssignale ($x_i$, $y_i$, $z_i$) des Funktionsblocks ($F_i$) im Funktionsplan entsprechen, enthaltenden Funktionsaufruf ($F_i$), dadurch gekennzeichnet, dass im Betriebssystem des Digitalrechners folgende Operationen vorgesehen sind:

- Suchen der Funktionsaufrufe ($F_i$) im Steuerprogramm;
- Schreiben der aufgefundenen Funktionsaufrufe ($F_i$) sequentiell mit den Listen ihrer Eingangs- und Ausgangsparameter ($x_i$, $y_i$, $z_i$) auf eine Datei;
- Zerlegen der Datei durch Zuordnung sequen-

## 13

tiell auf die Datei geschriebener Funktionsaufrufe ($F_i$) zu Teilsequenzen ($S_j$) von Funktionsaufrufen ($F_i$) wobei, beginnend mit dem zuletzt aufgefundenen Funktionsaufruf ($F_{imax}$), jeder Funktionsaufruf ($F_i$), dessen Ausgangsparameter ($z_i$) nicht zur Bildung eines Eingangsparameters ($z_i$) eines der jeweiligen Teilsequenz ($S_j$) bereits zugeordneten Funktionsaufrufs ($F_i$) beiträgt, einer neuen Teilsequenz ($S_j$) zugeordnet wird und wobei den Teilsequenzen ($S_j$) in der graphischen Darstellung Teilfunktionspläne zugeordnet sind, innerhalb derer die Funktionsblöcke hierarchisch miteinander verknüpft sind,

– Zuweisung von Werten zu einem ersten Satz von Variablen ($\Delta H(F_i)$), welche den einzelnen Funktionsaufrufen ($F_i$) zugeordnet sind, wobei die Werte die Grösse der horizontalen Ausdehnung ($\Delta H(F_i)$) der durch die einzelnen Funktionsaufrufe aufgerufenen Funktionsblöcke ($F_i$) einschliesslich von Randzonen ($R_E$, $R_A$) in der graphischen Darstellung des Funktionsplanes auf der Anzeigevorrichtung (16) bis auf einen gemeinsamen Skalierungsfaktor festlegen;

– Zuweisung von Werten zu einem zweiten Satz von Variablen ($H(F_i)$), welche ebenfalls den einzelnen Funktionsaufrufen ($F_i$) zugeordnet sind, wobei diese Werte die Grösse der Horizontalverschiebung ($H(F_i)$) der durch die einzelnen Funktionsaufrufe ($F_i$) aufgerufenen Funktionsblöcke ($F_i$) in der graphischen Darstellung des Funktionsplanes auf der Anzeigevorrichtung (16) bis auf den Skalierungsfaktor festlegen und jeweils der grössten der Summen entsprechen, welche sich für den jeweils betrachteten Funktionsaufruf ($F_i$) aus den Werten der Variablen ($\Delta H(F_i)$) des ersten Satzes bilden lassen, welchen den von diesem Funktionsaufruf ($F_i$) parametermässig abhängigen Funktionsaufrufen ($F_i$) zugeordnet sind;

– Zuweisung von Werten zu einem dritten Satz von Variablen ($\Delta V(S_j)$), welche den Teilsequenzen ($S_j$) zugeordnet sind, wobei die Werte die Grösse der vertikalen Ausdehnung $\Delta V(S_j)$) der den einzelnen Teilsequenzen ($S_j$) zugeordneten Teilfunktionspläne in der graphischen Darstellung des Funktionsplanes auf der Anzeigevorrichtung (16) bis auf den Skalierungsfaktor festlegen und jeweils der doppelten Anzahl der Funktionsaufrufe ($F_i$) in der jeweiligen Teilsequenz ($S_j$) zuzüglich der Anzahl der nicht in der jeweiligen Teilsequenz ($S_j$) selbst erzeugten Eingangsparameter ($x_i$, $z_i$) vermindert um die Anzahl der in der jeweiligen Teilsequenz ($S_j$) selbst erzeugten ersten und letzten Eingangsparameter ($z_i$) in den Parameterlisten der einzelnen Funktionsaufrufe ($F_i$) in der jeweiligen Teilsequenz ($S_j$) entsprechen;

– Zuweisung von Werten zu einem vierten Satz von Variablen ($V(S_j)$), welche wiederum den Teilsequenzen ($S_j$) zugeordnet sind, wobei die Werte die Grösse der Vertikalverschiebung

## 14

($V(S_j)$) der den einzelnen Teilsequenzen ($S_j$) zugeordneten Teilfunktionspläne in der graphischen Darstellung des Funktionsplane auf der Anzeigevorrichtung (16) bis auf den Skalierungsfaktor festlegen und sich jeweils aus der Summe der Werte von Variablen ($\Delta V(S_j)$) des dritten Satzes ergeben, welche den in der Sequenz der Teilsequenzen ($S_j$) der jeweiligen Teilsequenz ($S_j$) vorangehenden Teilsequenzen ($S_j$) zugeordnet sind.

**Claims**

Programming device (3) for generating, maintaining and graphically displaying the control program of a storedprogram controller (2) with a digital computer, which machine-readably stores its control program, and a display device (16) for displaying a function diagram of the control program which is generated by the operating system of the digital computer and is built up of signal-processing function blocks ($F_i$), in which arrangement the control program exhibits for each signal processing function represented by a function block ($F_i$) a function module associated with this function block ($F_i$) and a function call ($F_i$) which calls up this function module and contains input and output parameters ($x_i$, $y_i$, $z_i$) which correspond to input and output signals ($x_i$, $y_i$, $z_i$) of the function block ($F_i$) in the function digram, characterized in that the following operations are provided in the operating system of the digital computer:

– searching for the function calls ($F_i$) in the control program;

– sequential writing of the function calls ($F_i$) found with the lists of their input and output parameters ($x_i$, $y_i$, $z_i$) into a file;

– splitting the file by allocating the function calls ($F_i$) sequentially written into the file to part sequences ($S_j$) of function calls ($F_i$), in which operation, beginning with the function call ($F_{imax}$) last found, each function call ($F_i$), the output parameter ($z_i$) of which does not contribute to the formation of an input parameter ($z_i$) of a function call ($F_i$) already allocated to the respective part sequence ($S_j$), is allocated to a new part sequence ($S_j$) and in which the part sequences ($S_j$) in the graphic display are associated with part function diagrams within which the function blocks are hierarchically combined with one another,

– allocating values to a first set of variables ($\Delta H(F_i)$) which are allocated to the individual function calls ($F_i$), in which operation the values establish the magnitude of the horizontal extension ($\Delta H(F_i)$) of the function blocks ($F_i$) called up by the individual function calls including edge zones ($R_E$, $R_A$) in the graphical representation of the function diagram on the display device (16) apart from a common scaling factor;

– allocating values to a second set of variables

(H(F$_i$)) which are also allocated to the individual function calls (F$_i$), in which operation these values establish the magnitude of the horizontal displacement (H(F$_i$)) of the function blocks (F$_i$) called up by the individual function calls (F$_i$) in the graphical representation of the function diagram on the display device (16), apart from the scaling factor, and in each case correspond to the largest of the sums which, for the function call (F$_i$) considered in each case, can be formed from the values of the variables (AH(F$_i$)) of the first set which are allocated to the function calls (F$_i$) dependent on this function call (F$_i$) with respect to parameters;

- allocating values to a third set of variables (ΔV(S$_j$)) which are associated with the part sequences (S$_j$), in which operation the values establish the magnitude of the vertical extension (Δ V(S$_j$)) of the part function diagrams allocated to the individual part sequences (S$_j$) in the graphical representation of the function diagram on the display device (16), apart from the scaling factor, and in each case correspond to twice the number of function calls (F$_i$) in the respective part sequence (S$_j$) plus the number of the input parameters (x$_i$, z$_i$) not generated in the respective part sequence (S$_i$) itself less the number of the first and last input parameters (z$_i$), generated in the respective part sequence (S$_i$) itself, in the parameter lists of the individual function calls (F$_i$) in the respective part sequence (S$_j$);

- allocating values to a fourth set of variables (V(S$_j$)) which, in turn, are allocated to the part sequences (S$_j$), in which operation the values establish the magnitude of the vertical displacement (V(S$_j$)) of the part function diagrams allocated to the individual part sequences (S$_j$) in the graphical representation of the function diagram on the display device (16), apart from the scaling factor, and in each case result from the sum of the values of variables (Δ V(S$_j$)) of the third set which are allocated to the part sequences (S$_j$) preceding the respective part sequence (S$_j$) in the sequence of part sequences (S$_j$).

**Revendications**

Appareil programmateur (3) pour la création, la maintenance et la représentation graphique du programme de commande d' une commande (2) programmable en mémoire comportant un calculateur numérique enregistrant son programme d'une manière lisible à la machine et un dispositif de visualisation (16) pour représenter un schéma fonctionnel du programme de commande élaboré par le système d'exploitation du calculateur numérique et constitué de blocs de fonctions (F$_i$) pour le traitement de signaux, le programme de commande comprenant, pour chaque fonction de traitement de signaux représentée par un bloc de fonction (F$_i$), un module de fonction affecté à ce bloc de fonction (F$_i$) ainsi qu'un appel de fonction (F$_i$) appelant ce module de fonction et contenant des paramètres d'entrée et de sortie (x$_i$, y$_i$, z$_i$), qui correspondent à des signaux d'entrée et de sortie (x$_i$, y$_i$, z$_i$) du bloc de fonction (F$_i$) dans le schéma fonctionnel, caractérisé en ce que dans le système d'exploitation du calculateur numérique sont prévues les opérations suivantes :

- recherche des appels de fonction (F$_i$) dans le programme de commande;
- inscription des appels de fonctions (F$_i$) trouvés séquentiellement avec les listes de leurs paramètres d'entrée et de sortie (x$_i$, y$_i$, z$_i$) dans un fichier;
- dégroupage du fichier par affectation séquentielle des appels de fonctions (F$_i$) inscrits dans le fichier à des séquences partielles (S$_j$) d'appels de fonctions (F$_i$), de sorte que, au départ de l'appel de fonction (F$_{imax}$) trouvé en dernier lieu, chaque appel de fonction F$_{(i)}$, dont le paramètre de sortie (z$_i$) ne contribue pas à la formation d'un paramètre d'entrée (z$_i$) d'un appel de fonction (F$_i$) déjà affecté à la séquence partielle (S$_j$) en question, est affecté à une nouvelle séquence partielle (S$_j$), et aux séquences partielles (S$_j$), dans la représentation graphique, sont affectées des schémas fonctionnels partiels dans lesquels les blocs de fonctions sont reliés les uns aux autres de manière hiérarchique;
- attribution de valeurs à un premier jeu de variables (ΔH(F$_i$)) qui sont affectées aux appels de fonctions (F$_i$) individuels, les valeurs fixant la grandeur de l'extension horizontale (ΔH(F$_i$)) des blocs de fonctions (F$_i$) appelés par les appels de fonctions individuels y compris des zones marginales (R$_E$, R$_A$) dans la représentation graphique du schéma fonctionnel sur le dispositif de visualisation (16) jusqu'à un facteur d'échelle commun;
- attribution de valeurs à un deuxième jeu de variables (H(F$_i$)) qui sont également affectées aux appels de fonctions individuels (F$_i$), ces valeurs fixant la grandeur du décalage horizontal (H(F$_i$)) des blocs de fonctions (F$_i$) appelés par les appels de fonctions individuels (F$_i$) dans la représentation graphique du schéma fonctionnel sur le dispositif de visualisation (16) jusqu'au facteur d'échelle et correspondant chaque fois à la plus grande des sommes qui, pour l'appel de fonction (F$_i$) chaque fois considéré peuvent être formées des valeurs des variables (ΔH(F$_i$)) du premier jeu qui sont affectées aux appels de fonctions (F$_i$) dépendant paramétriquement de cet appel de fonction (F$_i$);
- attribution de valeurs à un troisième jeu de variables (ΔV(S$_j$)) qui sont affectées aux séquences partielles (S$_j$), les valeurs fixant la grandeur de l'extension verticale (ΔV(S$_j$)) des schémas fonctionnels partiels affectés aux séquences partielles individuelles (S$_j$)) dans la représentation graphique du schéma fonctionnel sur le dispositif de visualisation (16) jusqu'au facteur d'échelle et correspondant chaque fois au double du nombre des appels de fonctions ($F_i$) dans la séquence partielle ($S_j$)) en question avec en plus le nombre des paramètres d'entrée ($x_i$, $z_i$) qui ne sont pas produits dans la séquence partielle en question ellemême ($S_j$) et au moins le nombre des premiers et derniers paramètres d'entrée ($z_i$) produits dans la séquence partielle en question ($S_j$)) elle-même, dans les listes de paramètres des appels de fonctions individuels ($F_i$) de la séquence partielle ($S_j$)) en question;

— attribution de valeurs à un quatrième jeu de variables ($V(S_j)$)) qui sont à nouveau affectées aux séquences partielles ($S_j$)), les valeurs fixant la grandeur du décalage vertical ($V(S_j)$)) des schémas fonctionnels partiels affectés aux séquences partielles individuelles ($S_j$)) dans la représentation graphique du schéma fonctionnel sur le dispositif de visualisation (16) jusqu'au facteur d'échelle et étant formées chaque fois de la somme des valeurs des variables ($\Delta V(S_j)$)) du troisième jeu qui sont affectées aux séquences partielles ($S_j$) qui, dans la succession des séquences partielles ($S_j$), précèdent la séquence partielle ($S_j$) en question.

FIG. 1

FIG. 2

$$i := i_{max} \; ; \; j = 1$$

$F i_{max}$ wird der Teilsequenz $S_1$ zugeordnet

Existiert ein $F_{i-1}$ — nein → ENDE

ja

$$i := i - 1$$

Der Ausgangsparameter von $F_i$ trägt zur Bildung eines Eingangs - parameters $F_i \quad C S_j \quad$ bei

nein

ja

$$j := j + 1$$

$F_i$ wird der Teilsequenz $S_j$ zugeordnet

FIG. 3

FIG. 4

FIG. 5

$$V(S_j) := 0 \; ; \; j = 1$$

Existiert ein $S_{j+1}$ —— nein —→ ENDE

ja

$$j := j+1$$
$$V(S_j) = V(S_{j-1}) + \Delta V(S_{j-1})$$

FIG. 7

$$H(F_i) := 0 \quad ; i := i\,max$$

ENDE ←—— ja —— $i = 0$

nein

$$i := i-1 \quad ; \quad k := i$$

Existiert ein $F_{k+1}$ —— nein

ja

$$k := k + 1$$

unabhängig von $F_i$ ←—— $F_k$

abhängig von $F_i$

$\leq H(F_i)$ ←—— $H(F_k) + \Delta H(F_k)$

$> H(F_i)$

$$H(F_i) := H(F_k) + \Delta H(F_k)$$

## FIG. 6